# EUROPÄISCHE PATENTSCHRIFT

(11) **EP 1 409 325 B1**
(45) Veröffentlichungstag und Bekanntmachung des Hinweises auf die Patenterteilung: **13.07.2005**
(21) Anmeldenummer: 01940443.3
(22) Anmeldetag: 10.05.2001
(51) Int. Cl.: B62D 5/06, B62D 5/30

(54) **HYDRAULISCHE SERVOLENKUNG IN INTEGRIERTER BAUWEISE**
HYDRAULIC POWER-ASSISTED STEERING SYSTEM WITH AN INTEGRATED CONSTRUCTION
DIRECTION ASSISTEE HYDRAULIQUE DE TYPE INTEGREE

(30) Priorität: 20.09.2000 DE 10046857
(43) Veröffentlichungstag der Anmeldung: 21.04.2004
(73) Patentinhaber: ThyssenKrupp Presta SteerTec GmbH, 40476 Düsseldorf (DE)
(72) Erfinder: BÜHLER, Holger, 73614 Schorndorf (DE); CLEPHAS, Bernd, 73730 Esslingen (DE); HORWATH, Jochen, 72669 Unterensingen (DE); MARZIAN, Christian, 73104 Börtlingen (DE); ROSENFELD, Albrecht, 70329 Stuttgart (DE); SCHÖNTHALER, Jochen, 73269 Hochdorf (DE); SIKORA, Karsten, 73274 Notzingen (DE)
(74) Vertreter: LENZING GERBER
(86) Internationale Anmeldenummer: PCT/EP2001/005328
(87) Internationale Veröffentlichungsnummer: WO 2002/024509

(56) Entgegenhaltungen:
- DE-A- 19 646 425
- DE-A- 19 855 404
- US-A- 4 598 629

## Beschreibung

Die vorliegende Erfindung betrifft eine hydraulische Servolenkung mit den Merkmalen des Oberbegriffs des Anspruchs 1.

Eine derartige Servolenkung, die im Normalbetrieb ohne eine mechanische Kupplung zwischen der Lenkhandhabe und dem Lenkaktuator arbeitet, wird als Steer-by-Wire-Lenkung (SbW-Lenkung) bezeichnet. Bei derartigen Lenkungen wird besonders hoher Wert auf die Betriebssicherheit gelegt, da ein Ausfall der Lenkbarkeit des Kraftfahrzeuges während der Fahrt ein sehr hohes Unfallrisiko darstellt.

Aus der DE 19855404 A1 ist eine gattungsgemäße Servolenkung bekannt, bei der zwei Hydraulikkreise bis zum Eingang eines Wechselventils vollständig redundant ausgelegt sind. Nicht redundant sind hierbei lediglich das Wechselventil und der Lenkaktuator, die gemäß einer dort beschriebenen besonderen Ausführungsform in integrierter Bauweise zu einer baulichen Einheit zusammengefaßt werden sollen.

Bei dieser Servolenkung erweist sich als nachteilig, daß aufgrund der vollständigen Redundanz eine Vielzahl von hydraulischen Bauelementen in aufgelöster Bauweise über separate Hydraulikleitungen oder -schläuche miteinander zu verbinden sind. Der Montageaufwand und das Leckagerisiko steigen hierdurch an. Es ist außerdem erforderlich, eine größere Anzahl von Drucksensoren zur Überwachung der Einzelkomponenten vorzusehen. Das Ausführungsbeispiel der DE 19855404 A1 weist insgesamt 12 Drucksensoren auf.

Es ist deshalb Aufgabe der Erfindung, eine gattungsgemäße Servolenkung bei mindestens gleicher Betriebssicherheit einfacher zu gestalten. Diese Aufgabe wird von einer Servolenkung mit den Merkmalen des Anspruchs 1 gelöst.

Weil die Servoventilanordnung in baulicher Einheit mit der Wechselventilanordnung und dem Stellmotor derart zusammengefaßt ist, daß von der Servoventilanordnung zu der Wechselventilanordnung und dem Stellmotor führende Hydraulikleitungen als Kanäle innerhalb des Grundkörpers ausgebildet sind, fällt bei der Montage der erfindungsgemäßen Servolenkung der Schritt der Verbindung der Servoventilanordnung mit der Wechselventilanordnung weg. Diese Leitungen können bereits bei der Fertigung des Grundkörpers darin angeordnet werden und werden dann bereits bei der Fertigung der baulichen Einheit des Stellmotors mit den Ventilen gebildet und leckagefrei montiert. Diese bauliche Einheit kann als einheitliches System an den Fahrzeughersteller geliefert und dort mit geringem Montageaufwand in das Fahrzeug eingebaut werden.

Bei einer vorteilhaften Ausführungsform ist vorgesehen, daß der Grundkörper zwei lösbare Ventilblöcke aufweist, die Aufnahmen für die Servoventilanordnung sowie für die Wechselventilanordnung tragen. Diese Ventilblöcke können als separate Bauteile des Grundkörpers gefertigt werden und beispielsweise aus einem anderen Material bestehen. Sie können auch in verschiedenen Ausführungen für verschiedene Ventile und/oder verschiedene Querschnitte ausgeführt werden, so daß der Grundkörper letztlich für unterschiedliche Anwendungen vorbereitet sein kann.

Eine besonders montage- und reparaturfreundliche Ausführungsform ergibt sich, wenn die Servoventilanordnung sowie die Wechselventilanordnung in Cartridge-Bauweise oder Patronenbauweise in den Grundkörper, insbesondere in die Ventilblöcke eingesetzt sind. Die Ventilanordnungen können dann bis auf die hydraulischen Anschlüsse als Komponenten zugeliefert werden und werden einfach in die entsprechenden Aufnahmen eingesetzt. Eine einfache Sensorik zur Überwachung der Funktionsfähigkeit kann dadurch vorgesehen werden, daß wenigstens ein Drucksensor in der Weise mit dem Grundkörper verbunden ist, daß in ebenfalls integrierter Bauweise über einen in dem Grundkörper vorgesehenen Sensorkanal der Druck in wenigstens einem Kanal, insbesondere in den Motoranschlüssen überwachbar ist. Hierdurch entfällt weiterer Aufwand für den Anschluß des Drucksensors. Insbesondere können zwei Drucksensoren für den Druck in den Motoranschlüssen mit dem Grundkörper verschraubt sein.

Eine besonders rationelle Ausführungsform sieht vor, daß insgesamt nicht mehr als vier Hydraulikleitungen in Form von Schläuchen oder Rohren mit dem Grundkörper verbunden sind, nämlich jeweils die Druckseite und die Niederdruckseite des ersten und des zweiten Hydraulikkreises. Damit beschränkt sich bei der Montage der Servolenkung in dem Fahrzeug der Montageaufwand für die Hydraulik auf insgesamt vier Schlauchanschlüsse.

Eine weiter bevorzugte Ausführungsform sieht vor, daß der erste Hydraulikkreis eine von einer Antriebsmaschine des Fahrzeugs getriebene Hydraulikpumpe aufweist und daß der zweite Hydraulikkreis eine von einem Elektromotor angetriebene Hydraulikpumpe aufweist. Dabei kann das Servoventil des ersten Hydraulikkreises ein Ventil mit offener Mitte sein und das Servoventil des zweiten Hydraulikkreises ein Ventil mit geschlossener Mitte sein. Diese Ausführungsform stellt sicher, daß bei einem Ausfall der Antriebsmaschine der zweite Hydraulikkreis funktioniert und bei einem Ausfall des zweiten Hydraulikkreises der erste Hydraulikkreis nicht zwangsläufig beeinträchtigt ist. Die Hydraulikpumpe des zweiten Hydraulikkreises kann weiter eine geringere Förderleistung aufweisen als die Hydraulikpumpe des ersten Hydraulikkreises. Hierdurch können die Komponenten des zweiten Hydraulikkreises preiswerter, leichter und kompakter bauend ausgeführt werden. Hierbei ist insbesondere von Vorteil, wenn der Druck vor dem Servoventil des zweiten Hydraulikkreises mittels eines in baulicher Einheit mit dem Grundkörper integrierten Drucksensors detektierbar ist.

Schließlich ergibt sich eine weitere Vereinfachung, wenn das üblicherweise zwischen der Druckseite und der Niederdruckseite eines Hydraulikkreises vorgesehene Druckbegrenzungsventil ebenfalls in den Grundkörper baulich integriert ist.

Im folgenden wird die vorliegende Erfindung anhand eines Ausführungsbeispiels beschrieben.

Es zeigen:
- Figur 1:: einen Hydraulikschaltplan einer erfindungsgemäßen Servolenkung; sowie
- Figur 2:: die bauliche Einheit des Stellmotors mit den Ventilanordnungen und den Sensoren in einer perspektivischen Darstellung.

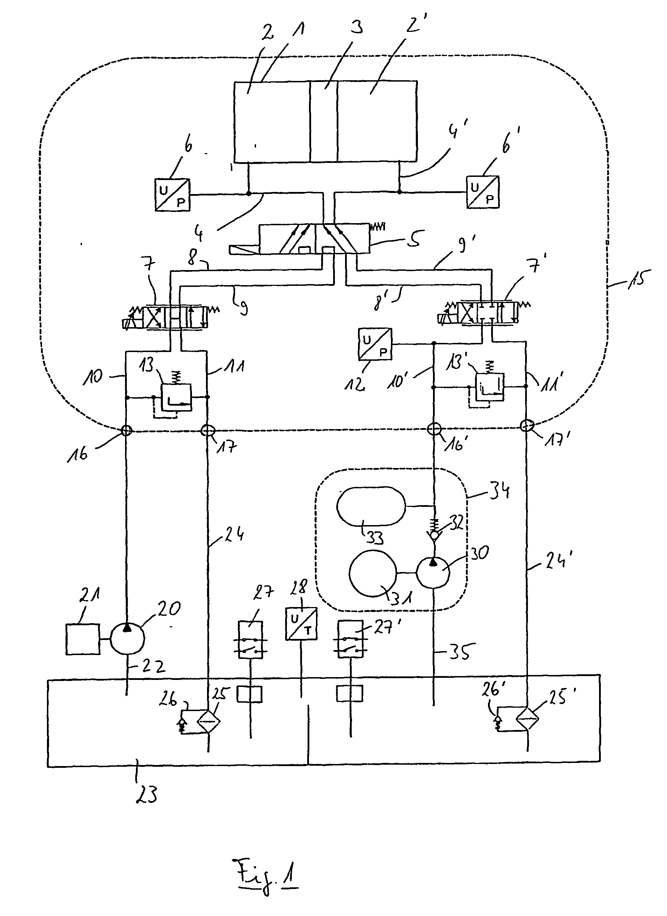

In der Figur 1 ist ein Hydraulikschaltplan eines Ausführungsbeispiels der vorliegenden Erfindung dargestellt. Zur Betätigung der Fahrzeuglenkung ist ein hydraulischer Stellmotor 1 mit zwei Arbeitsräumen 2, 2' vorgesehen. Die Arbeitsräume 2, 2' sind von einem nur schematisch dargestellten Arbeitskolben 3 begrenzt. Die Arbeitsräume 2, 2' stehen über Hydraulikleitungen 4, 4' mit einer elektrisch betätigten Wechselventilanordnung 5 in Verbindung. Den Hydraulikleitungen 4, 4' sind Drucksensoren 6, 6' zugeordnet. Die Wechselventilanordnung 5 ist wiederum mit zwei elektrisch zu betätigenden Steuerventilanordnungen 7, 7' verbunden. Dabei sind zwischen der Wechselventilanordnung 5 und der Steuerventilanordnung 7 zwei Leitungen 8, 9 vorgesehen, die zwei weiteren Hydraulikleitungen 8', 9' zwischen der Wechselventilanordnung 5 und der Steuerventilanordnung 7 entsprechen.

Die Steuerventilanordnung 7 ist wiederum mit Hydraulikleitungen 10, 11 verbunden, die die Druckseite bzw. die Niederdruckseite eines Hydraulikpumpenanschlusses darstellen. In gleicher Weise ist die Steuerventilanordnung 7' mit Hydraulikleitungen 10', 11' verbunden. Der Hydraulikleitung 10' ist, anders als der Hydraulikleitung 10, ein Drucksensor 12 zugeordnet, mit dem der in der Hydraulikleitung 10' anstehende Hydraulikdruck überprüft werden kann.

Die Leitungen 10 und 11 bzw. 10', 11' sind über Druckbegrenzungsventile 13 bzw. 13' miteinander verbunden.

Die bislang beschriebenen Bauelemente sind in einer baulichen Einheit in der Weise zusammengefügt, daß beispielsweise ein Gehäuse des Servomotors 1 alle Leitungen 4, 4'; 8, 8'; 9, 9'; 10, 10' sowie 11, 11' in Form von Bohrungen enthält und daß die Ventilanordnungen 5, 7 und 7' in Cartridge-Bauweise eingesetzt sind, wie dies beispielsweise aus Antiblockiersystemen bekannt ist. Auch die Drucksensoren 6, 6' und 12 sind in entsprechende Gewindebohrungen in dem Gehäuse eingeschraubt. Gleiches gilt für die Druckbegrenzungsventile 13, 13'.

Aus der baulichen Einheit, die durch die gestrichelte Linie 15 angedeutet ist, führen insgesamt vier Hydraulikanschlüsse 16, 17 und 16', 17' heraus. Die Anschlüsse 16, 17; 16', 17' bilden die hydraulischen Druck- und Niederdruckanschlüsse der baulichen Einheit 15.

An dem druckseitigen Anschluß 16 ist in an sich bekannter Weise eine Hydraulikpumpe 20 angeschlossen, die von einem Antriebsmotor 21 des Fahrzeugs angetrieben wird und die über eine Saugleitung 22 aus einem Hydraulikreservoir 23 gespeist wird. Der Anschluß 17 ist mit einer Rücklaufleitung 24 verbunden, die über einen Filter 25 mit einem Bypassventil 26 in das Reservoir 23 mündet. Dem Reservoir 23 sind schließlich ein Fullstandssensor 27 und ein Temperatursensor 28 zugeordnet.

Die Bauelemente 7 bis 26 bilden den ersten Hydraulikkreis.

Der Anschluß 16' ist mit der Druckseite einer Hydraulikpumpe 30 verbunden, die von einem Elektromotor 31 angetrieben wird. Die Hydraulikpumpe 30 liefert den Hydraulikdruck über ein Rückschlagventil 32, wonach er in einem Druckspeicher 33 gespeichert werden kann. Die Pumpe 30, der Elektromotor 31, das Rückschlagventil 32 und der Druckspeicher 33 können dabei in einer baulichen Einheit 34 zusammengefaßt sein. Die Hydraulikpumpe 30 wird über eine Saugleitung 35 aus dem Reservoir 23, genauer gesagt aus einer separaten Kammer, gespeist. Dem Reservoir ist ein Füllstandssensor 27' zugeordnet.

Der Niederdruckanschluß 17' ist über eine Rücklaufleitung 24' und einen Filter 25' sowie ein Bypassventil 26' mit dem Reservoir 23 verbunden.

Die Bauelemente 7' bis 26' sowie 30 bis 35 bilden den zweiten Hydraulikkreis.

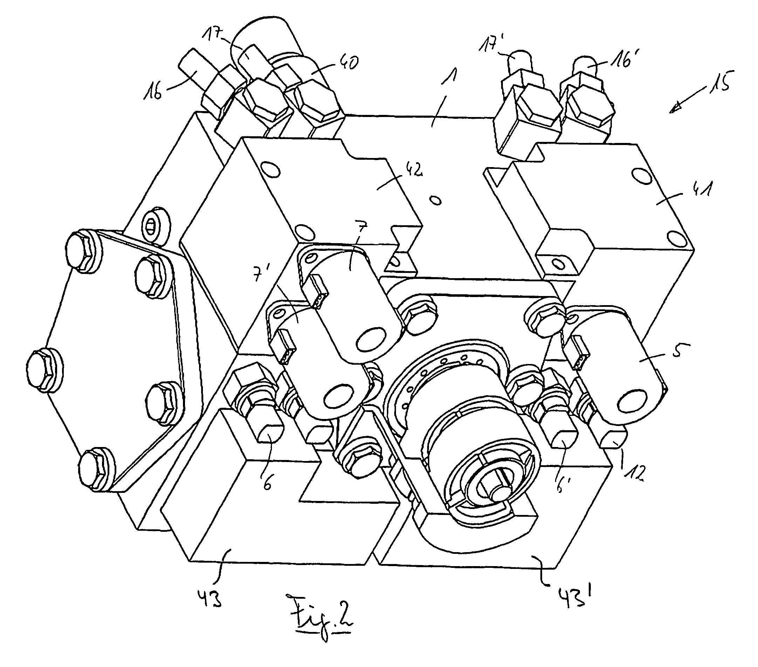

Die Figur 2 zeigt das bislang anhand eines Hydraulikschaltplans beschriebene Ausführungsbeispiel in einer perspektivischen Darstellung.

Es ist ersichtlich, daß der Hydraulikmotor 1 mit einer Abtriebswelle 40 zur Betätigung der Lenkung in einen im wesentlichen kastenförmigen Grundkörper integriert ist. Der kastenförmige Grundkörper enthält zwei Ventilblöcke 41 und 42, in die die Wechselventilanordnung 5 ebenso wie die Steuerventilanordnungen 7, 7' in Cartridge-Bauweise eingesetzt sind. Die nicht sichtbaren Verbindungsleitungen 4, 4'; 8, 8'; 9, 9' sind in Form von Bohrungen in dem Grundkörper angeordnet, wie dies beispielsweise aus ABS-Aggregaten in der Praxis bekannt ist. Die Drucksensoren 6, 6' sowie 12 sind in den Grundkörper des Stellmotors 1 eingeschraubt und stehen dort mit den entsprechenden Kanälen in Verbindung. Die Leitungen 10, 11 sowie 10', 11' enden in den sichtbaren Anschlüssen 16, 17 sowie 16', 17'.

Die in der Figur 2 dargestellte Einheit bildet insgesamt die bauliche Einheit 15, wie sie in der Figur 1 mit der gestrichelten Umrandung dargestellt ist. Sie trägt außerdem zwei elektronische Steuerungen 43 und 43', die ebenfalls an dem Grundkörper des Stellmotors 1 befestigt sind, was den Installationsaufwand weiter verringert.

In der Praxis wird die bauliche Einheit 15 gemäß Figur 2 als fertig montiertes System beim Kraftfahrzeughersteller in das Fahrzeug eingebaut. Es sind lediglich die elektrischen Anschlüsse der Sensoren 6, 6' und 12 sowie der Ventilanordnungen 5, 7, 7' zu kontaktieren und die Anschlüsse 16, 17; 16', 17' mit den entsprechenden Hydraulikleitungen zu verbinden. Die gesamte interne Verschaltung der Einheit 15 ist bereits beim Hersteller dieser Einheit vormontiert und aufgrund der Bauweise mit sehr hoher Sicherheit leckagefrei.

Die Steuerventilanordnung 7 ist in an sich bekannter Weise ein Servoventil mit offener Mitte, so daß die Hydraulikpumpe 20 einen permanenten Volumenstrom liefern kann. Die Steuerventilanordnung 7' ist im Gegensatz dazu ein Ventil mit geschlossener Mitte, so daß in der dargestellten Schaltposition der am Sensor 12 anstehende Druck, der dem Druck im Druckspeicher 33 entspricht, auch ohne Betrieb der Pumpe 30 aufrechterhalten bleibt. Lediglich bei einem Druckabfall, wie er durch Speisung der Arbeitsräume 2 oder 2' eintritt, muß der Elektromotor 31 in Betrieb gesetzt werden und über die Pumpe 30 das Reservoir 33 wieder auffüllen, so daß der nötige Betriebsdruck am Sensor 12 ansteht. Wenn der zweite Hydraulikkreis nicht aktiv ist oder nur sehr kleine Lenkbewegungen zu liefern hat, muß deshalb die Hydraulikpumpe 30 nicht permanent in Betrieb sein. Sie kann deshalb relativ klein und leicht ausgelegt werden.

Im Fahrbetrieb kann diese Servolenkung wie aus dem erwahnten Stand der Technik bekannt betrieben werden. Insbesondere kann bei einem in einem der Hydraulikkreise erkannten Fehler automatisch auf den jeweils anderen Hydraulikkreis umgeschaltete werden und dadurch die für die Fahrsicherheit erforderliche Redundanz gewährleistet werden.

Die Anordnung der Drucksensoren 6, 6' zwischen der Wechselventilanordnung 5 und den Arbeitsräumen 2, 2' ermöglicht dabei eine unmittelbare Kontrolle, ob an den Steuerventilen 7, 7' anliegende Steuersignale in entsprechende Druckverläufe umgesetzt werden. Allein die Abweichung des Druckverlaufs am Sensor 6, 6' von dem vorgesehenen Sollwert kann dabei als Fehlerbedingung ausgewertet werden, ohne daß die übrigen Bauelemente separat ausgewertet werden müssten.

## Patentansprüche

1. Hydraulische Servolenkung für nicht spurgebundene Fahrzeuge, insbesondere Kraftfahrzeuge, mit
- einer fahrerseitig betätigten Lenkhandhabe, z. B. einem Lenkhandrad,
- einem mit gelenkten Fahrzeugrädern zu deren Lenkverstellung zwangsgekoppelten, doppelt wirkenden, einen Grundkörper aufweisenden hydraulischen Stellmotor (1) bzw. Lenkaktuator,
- einer motorisch, insbesondere elektrisch betätigten Servoventilanordnung (7, 7'), welche über einen Druckanschluß mit der Druckseite einer Hydraulikpumpe, über einen Niederdruckanschluß mit der Saugseite der Hydraulikpumpe oder einem mit der Saugseite kommunizierenden Hydraulikreservoir und über zwei Hydraulikleitungen (4, 4') mit den beiden Seiten des Stellmotors verbunden ist und eine Druckdifferenz zwischen den Hydraulikleitungen (4, 4') bezüglich Maß und Richtung zu steuern gestattet, und
- einer elektronischen Regelanordnung, welche einen von der Lenkhandhabe betätigten Lenkwinkel-Sollwertgeber sowie einen mit den gelenkten Fahrzeugrädern betatigten Lenkwinkel-Istwertgeber aufweist und das Servoventil (7, 7') in Abhängigkeit von einem Soll-Istwert-Vergleich regelt, wobei
- die Servoventilanordnung (7, 7') sowie Pumpe (20, 30) unter Bildung wenigstens eines ersten und eines zweiten Hydraulikkreises doppelt bzw. mehrfach parallel angeordnet sind,
- zwischen den Hydraulikkreisen und dem Stellmotor (1) eine Wechselventilanordnung (5) vorgesehen ist, die in jeder ihrer Stellungen jeweils einen anderen Hydraulikkreis mit dem Stellmotor (1) verbindet und die übrigen Hydraulikkreise gegenüber dem Stellmotor (1) absperrt und die mit dem Stellmotor (1) in einer baulichen Einheit integriert ist, und
- wobei eine mit einer Sensorik (6, 6'; 12; 27, 27') zur Erfassung von Betriebsparametern der Hydraulikkreise und/oder mit der Regelanordnung kombinierte elektronische Überwachungseinrichtung bei Störungen im mit dem Stellmotor (1) verbundenen Hydraulikkreis und/oder in der diesem Hydraulikkreis zugeordneten Regelstrecke der Regelanordnung die Wechselventilanordnung (5) ansteuert, um einen ungestörten Hydraulikkreis bzw. einen Hydraulikkreis mit ungestörter Regelstrecke mit dem Stellmotor zu verbinden, **dadurch gekennzeichnet, daß**
- die Servoventilanordnung (7, 7') in baulicher Einheit (15) mit der Wechselventilanordnung (5) und dem Stellmotor (1) derart zusammengefaßt ist, daß von der Servoventilanordnung (7, 7') zu der Wechselventilanordnung (5) und dem Stellmotor (1) führende Hydraulikleitungen (4, 4'; 8, 8'; 9, 9') als Kanäle innerhalb des Grundkörpers ausgebildet sind.

2. Servolenkung nach Anspruch 1, **dadurch gekennzeichnet, daß** der Grundkörper zwei lösbare Ventilblöcke (41, 42) aufweist, die Aufnahmen für die Servoventilanordnung (7, 7') sowie für die Wechselventilanordnung (5) tragen.

3. Servolenkung nach einem der vorhergehenden Ansprüche, **dadurch gekennzeichnet, daß** die Servoventilanordnung (7, 7') sowie die Wechselventilanordnung (5) in Cartridge-Bauweise in den Grundkörper, insbesondere in die Ventilblöcke (41, 42) eingesetzt sind.

4. Servolenkung nach einem der vorhergehenden Ansprüche, **dadurch gekennzeichnet, daß** wenigstens ein Drucksensor (6, 6') in der Weise mit dem Grundkörper verbunden ist, daß in ebenfalls integrierter Bauweise über einen in dem Grundkörper vorgesehenen Sensorkanal der Druck in wenigstens einem Kanal, insbesondere in den Hydraulikleitungen (4, 4') überwachbar ist.

5. Servolenkung nach einem der vorhergehenden Ansprüche, **dadurch gekennzeichnet, daß** zwei Drucksensoren (6, 6') für den Druck in den Hydraulikleitungen (4, 4') mit dem Grundkörper verschraubt sind.

6. Servolenkung nach einem der vorhergehenden Ansprüche, **dadurch gekennzeichnet, daß** insgesamt nicht mehr als vier nicht als Kanäle im Grundkörper angeordnete Hydraulikleitungen (16, 16'; 17, 17')mit dem Grundkorper verbunden sind, nämlich jeweils die Druckseite und die Niederdruckseite des ersten und des zweiten Hydraulikkreises.

7. Servolenkung nach einem der vorhergehenden Ansprüche, **dadurch gekennzeichnet, daß** der erste Hydraulikkreis eine von einer Antriebsmaschine (21) des Fahrzeugs betriebene Hydraulikpumpe (20) aufweist und daß der zweite Hydraulikkreis eine von einem Elektromotor (31) angetriebene Hydraulikpumpe (30) aufweist.

8. Servolenkung nach einem der vorhergehenden Ansprüche, **dadurch gekennzeichnet, daß** das Servoventil (7) des ersten Hydraulikkreises ein Ventil mit offener Mitte ist und daß das Servoventil (7') des zweiten Hydraulikkreises ein Ventil mit geschlossener Mitte ist.

9. Servolenkung nach einem der vorhergehenden Ansprüche, **dadurch gekennzeichnet, daß** die Hydraulikpumpe (30) des zweiten Hydraulikkreises eine geringere Förderleistung aufweist als die Hydraulikpumpe (20) des ersten Hydraulikkreises.

10. Servolenkung nach einem der vorhergehenden Ansprüche, **dadurch gekennzeichnet, daß** der Druck vor dem Servoventil (7') des zweiten Hydraulikkreises mittels eines in baulicher Einheit mit dem Grundkörper integrierten Drucksensors (12) detektierbar ist.

11. Servolenkung nach einem der vorhergehenden Ansprüche, **dadurch gekennzeichnet, daß** jeweils zwischen der Druckseite und der Niederdruckseite der Hydraulikkreise ein in den Grundkörper integriertes Druckbegrenzungsventil (13, 13') vorgesehen ist.

## Claims

1. Hydraulic power-assisted steering for non track-bound vehicles, in particular motor vehicles, with
- a driver-side operated steering handle, e.g. a steering wheel,
- a double-action hydraulic servomotor (1) and/or steering actuator, positively coupled with the steered vehicle wheels for their directional adjustment, and having a main body having,
- a mechanical, in particular electrically-operated servo valve arrangement (7, 7'), which is connected via a pressure connection to the pressure side of a hydraulic pump, via a low pressure connection to the suction side of the hydraulic pump or a hydraulic reservoir communicating with the suction side and via two hydraulic lines (4, 4') to the two sides of the servomotor and equipped to control a pressure differential between the hydraulic lines (4, 4') relating to proportion and direction, and
- an electronic control arrangement, which has a steering angle set point adjuster operated by the steering handle as well as a steering angle actual value adjuster operated with the steered vehicle wheels and controls the servo valve (7, 7') as a function of comparison between set point and actual value, whereby
- the servo valve arrangement (7, 7') as well as pump (20, 30) are parallel-arranged in duplicate and/or in multiple, forming at least a first and a second hydraulic circuit,
- a shuttle valve arrangement (5) is provided between the hydraulic circuits and the servomotor (1), which in each of its positions connects another hydraulic circuit in each case with the servomotor (1) shutting off the remaining hydraulic circuits from the servomotor (1) and is integrated with the servomotor (1) in a structural unit, and
- whereby an electronic monitoring device combined with a sensor system (6, 6', 12; 27, 27') for acquiring operating parameters of the hydraulic circuits and/or with the control arrangement in the case of problems in the hydraulic circuit connected to the servomotor (1) and/or in the control section of the control arrangement assigned to this hydraulic circuit actuates the shuttle valve arrangement (5), in order to connect a normally operating hydraulic circuit and/or a hydraulic circuit with normally operating control section to the servomotor, **characterised in that**
- the servo valve arrangement (7, 7') is combined in the structural unit (15) with the shuttle valve arrangement (5) and the servomotor (1) in such a way that hydraulic lines (4, 4'; 8, 8'; 9, 9') leading from the servo valve arrangement (7, 7') to the shuttle valve arrangement (5) and the servomotor (1) are formed as channels inside the main body.

2. Power-assisted steering according to Claim 1, **characterised in that** the main body has two detachable valve blocks (41, 42), which carry the seats for the servo valve arrangement (7, 7') as well as for the shuttle valve arrangement (5).

3. Power-assisted steering according to any one of the preceding claims, **characterised in that** the servo valve arrangement (7, 7') as well as the shuttle valve arrangement (5) are inserted cartridge-wise in the main body, particularly in the valve blocks (41, 42).

4. Power-assisted steering according to any one of the preceding claims, **characterised in that** at least one pressure sensor (6, 6') is connected to the main body in such a way that the pressure in at least one channel particularly in the hydraulic lines (4, 4') can be monitored via a sensor channel provided also built integrally in the main body.

5. Power-assisted steering according to any one of the preceding claims, **characterised in that** two pressure sensors (6, 6') for the pressure in the hydraulic lines (4, 4') are bolted to the main body.

6. Power-assisted steering according to any one of the preceding claims, **characterised in that** overall not more than four hydraulic lines (16, 16'; 17, 17'), arranged as channels in the main body are connected to the main body, that is to say the pressure side and the low pressure side of the first and the second hydraulic circuit respectively.

7. Power-assisted steering according to any one of the preceding claims, **characterised in that** the first hydraulic circuit has a hydraulic pump (20) driven by a driving unit (21) of the vehicle and that the second hydraulic circuit has a hydraulic pump (30) driven by an electric motor (31).

8. Power-assisted steering according to any one of the preceding claims, **characterised in that** the servo valve (7) of the first hydraulic circuit is a valve with an open centre and that the servo valve (7') of the second hydraulic circuit is a valve with a closed centre.

9. Power-assisted steering according to any one of the preceding claims, **characterised in that** the hydraulic pump (30) of the second hydraulic circuit has less pumping capacity than the hydraulic pump (20) of the first hydraulic circuit.

10. Power-assisted steering according to any one of the preceding claims, **characterised in that** the pressure before the servo valve (7') of the second hydraulic circuit can be detected by means of a pressure sensor (12) integrated with the main body as a structural unit.

11. Power-assisted steering according to any one of the preceding claims, **characterised in that** in each case a pressure relief valve (13; 13'), integrated in the main body is provided between the pressure side and the low pressure side of the hydraulic circuits.

## Revendications

1. Direction assistée hydraulique pour véhicules non guidés sur voie, en particulier des véhicules automobiles, comprenant
- une manette de guidage actionnée par le conducteur, par exemple un volant de guidage,
- un servomoteur (1) ou actionneur de guidage hydraulique, présentant un corps de base, à double effet, couplé de force avec des roues de véhicule guidées pour le déplacement de guidage,
- un dispositif de servosoupape (7, 7') actionné par moteur, en particulier de façon électrique, qui est relié au moyen d'un branchement de pression au côté pression d'une pompe hydraulique, au moyen d'un branchement de basse pression au côté aspiration de la pompe hydraulique ou à un réservoir hydraulique communiquant avec le côté aspiration et au moyen de deux conduites hydrauliques (4, 4') aux deux côtés du servomoteur et permet de commander une différence de pression entre les conduites hydrauliques (4, 4') en ce qui concerne la mesure et la direction et
- un dispositif de réglage électronique, qui présente un générateur de valeur de consigne d'angle de braquage actionné par la manette de guidage et un générateur de valeur réelle d'angle de braquage actionné avec les roues de véhicule guidées et règle la servosoupape (7, 7') en fonction d'une comparaison de valeur de consigne-valeur réelle,
- le dispositif de servosoupape (7, 7') et la pompe (20, 30) étant disposés en double ou plusieurs fois en parallèle en formant au moins un premier et un second circuits hydrauliques,
- un dispositif de soupape à deux voies (5), qui relie dans chacune de ses positions à chaque fois un autre circuit hydraulique au servomoteur (1), ferme les autres circuits hydrauliques par rapport au servomoteur (1) et qui est intégré avec le servomoteur (1) dans une unité de construction, étant prévue entre le circuit hydraulique et le servomoteur (1), et
- un dispositif de contrôle électronique, combiné avec des capteurs (6, 6' ; 12 ; 27, 27') pour l'enregistrement de paramètres de service des circuits hydrauliques et/ou avec le dispositif de réglage commandant le dispositif de vanne à deux voies (5) en cas d'incidents survenant dans le circuit hydraulique relié au servomoteur (1) et/ou dans le tronçon de réglage, attribué à ce circuit hydraulique, du dispositif de réglage, afin de relier un circuit hydraulique non perturbé ou un circuit hydraulique au tronçon de réglage non perturbé au servomoteur, **caractérisé en ce que**
- le dispositif de servosoupape (7, 7') est regroupé dans une unité de construction (15) avec le dispositif de soupape à deux voies (5) et le servomoteur (2) de telle sorte que des conduites hydrauliques (4, 4' ; 8, 8' ; 9, 9') venant du dispositif de servosoupape (7, 7') et allant au dispositif de soupape à deux voies et au servomoteur (1) sont conçues comme des canaux à l'intérieur du corps de base.

2. Direction assistée selon la revendication 1, **caractérisé en ce que** le corps de base présente deux blocs de soupape (41, 42) détachables, qui portent des logements pour le dispositif de servosoupape (7, 7') ainsi que pour le dispositif de soupape à deux voies (5).

3. Direction assistée selon l'une quelconque des revendications précédentes, **caractérisé en ce que** le dispositif de servosoupape (7, 7') et le dispositif de soupape à deux voies (5) sont insérés dans une conception "cartridge" dans le corps de base, en particulier dans les blocs de soupape (41, 42).

4. Direction assistée selon l'une quelconque des revendications précédentes, **caractérisé en ce que** au moins un capteur de pression (6, 6') est relié au corps de base en ce sens que la pression peut être contrôlée dans au moins un canal, en particulier dans les conduites hydrauliques (4, 4') dans une conception également intégrée au moyen d'un canal de capteur prévu dans le corps de base.

5. Direction assistée selon l'une quelconque des revendications précédentes, **caractérisé en ce que** deux capteurs de pression (6, 6') pour la pression sont vissés dans les conduites hydrauliques (4, 4') avec le corps de base.

6. Direction assistée selon l'une quelconque des revendications précédentes, **caractérisé en ce que** globalement pas plus de quatre conduites hydrauliques (16, 16' ; 17, 17') non disposées comme canaux dans le corps de base sont reliées au corps de base, à savoir à chaque fois le côté pression et le côté basse pression du premier et du second circuits hydrauliques.

7. Direction assistée selon l'une quelconque des revendications précédentes, **caractérisé en ce que** le premier circuit hydraulique présente une pompe hydraulique (20) actionnée par une machine d'entraînement (21) du véhicule et **en ce que** le second circuit hydraulique présente une pompe hydraulique (30) entraînée par un moteur hydraulique (31).

8. Direction assistée selon l'une quelconque des revendications précédentes, **caractérisé en ce que** la servosoupapc (7) du premier circuit hydraulique est une soupape avec un centre ouvert et **en ce que** la servosoupape (7') du second circuit hydraulique est une soupape avec un centre fermé.

9. Direction assistée selon l'une quelconque des revendications précédentes, **caractérisé en ce que** la pompe hydraulique (30) du second circuit hydraulique présente un débit plus faible que la pompe hydraulique (20) du premier circuit hydraulique.

10. Direction assistée selon l'une quelconque des revendications précédentes, **caractérisé en ce que** la pression avant de la servosoupape (7') du second circuit hydraulique peut être détectée au moyen d'un capteur de pression (12) intégré dans une unité de construction avec le corps de base.

11. Direction assistée selon l'une quelconque des revendications précédentes, **caractérisé en ce qu'**une vanne de limitation de pression (13 ; 13') intégrée dans le corps de base est prévue respectivement entre le côté pression et le côté basse pression des circuits hydrauliques.
